# EUROPÄISCHE PATENTANMELDUNG

(11) **EP 2 323 417 A2**
(43) Veröffentlichungstag der Anmeldung: **18.05.2011**
(21) Anmeldenummer: 10014378.3
(22) Anmeldetag: 08.11.2010
(51) Int. Cl.: H04N 17/00, H04N 5/225

(54) **Digitale Kamera und Verfahren zum Überwachen einer Signalverarbeitungseinrichtung**

(30) Priorität: 13.11.2009 DE 102009053280
(71) Anmelder: Arnold & Richter Cine Technik GmbH & Co. Betriebs KG, 80799 München (DE)
(72) Erfinder: Cieslinski, Michael, 85521 Ottobrunn (DE)
(74) Vertreter: Manitz, Finsterwald & Partner GbR

(57) **Zusammenfassung**

Die Erfindung betrifft eine digitale Kamera mit einem Bildsensor zur Erzeugung von analogen Bildsignalen, einem Analog-Digital-Wandler zur Umwandlung der Bildsignale in digitale Rohdaten, und einer Signalverarbeitungseinrichtung zur Erzeugung verarbeiteter Daten aus den Rohdaten, wobei die Signalverarbeitungseinrichtung einen Signalausgang aufweist. Die Kamera weist zumindest einen ersten Pufferspeicher zur Zwischenspeicherung zumindest eines Teils der digitalen Rohdaten und eine Auswerteeinrichtung auf, welche dazu ausgebildet ist, in dem ersten Pufferspeicher gespeicherte Rohdaten mit den verarbeiteten Daten zu vergleichen.

## Beschreibung

Die vorliegende Erfindung betrifft eine digitale Kamera mit einem Bildsensor zur Erzeugung von analogen Bildsignalen, einem Analog-Digitalwandler zur Umwandlung der Bildsignale in digitale Rohdaten, und einer Signalverarbeitungseinrichtung zur Erzeugung verarbeiteter Daten aus den Rohdaten, wobei die Signalverarbeitungseinrichtung einen Signalausgang aufweist.

Bekannte elektronische Kameras enthalten einen Bildsensor, der eine Vielzahl von in Zeilen und Spalten angeordneten lichtempfindlichen Elementen bzw. Pixel umfasst, welche durch ein Objektiv der Kamera fallendes Licht in elektrische Signale umwandeln. Zum Auslesen eines Bildes wird jedes der Pixel adressiert, und ein Signal, das zu einer durch eine Belichtung gesammelten Ladung des Pixels proportional ist, wird zu einem Ausgang des Bildsensors geleitet und in ein digitales Signal umgewandelt.

Die auf diese Weise in digitale Rohdaten umgewandelten Bildsignale werden gewöhnlich in einer nachfolgenden digitalen Signalverarbeitungseinrichtung weiter verarbeitet. Diese digitale Verarbeitung kann einen oder mehrere der folgenden Vorgänge umfassen:
- Durchführen von Korrekturschritten, insbesondere bezüglich eines Dunkelstroms, eines Offsetwerts, der Verstärkung, des oder der Farbwerte oder des Weißpunkts;
- Filtern zur Korrektur bezüglich der Aufnahmeapertur, der Kontrastübertragungsfunktion und/oder des Bildrauschens;
- Ändern der räumlichen Bildauflösung; oder
- Komprimieren der Rohdaten.

Die durch die Signalverarbeitung erhaltenen verarbeiteten Daten werden anschließend in einer Speichereinrichtung gespeichert.

Elektronische Kameras mit digitaler Signalverarbeitung werden heute zunehmend auch bei der Produktion von Kinofilmen eingesetzt. Bei dieser Anwendung treten regelmäßig sehr hohe Kosten für Schauspieler und die Produktionsmitarbeiter auf. Daher ist es besonders wichtig, dass die eingesetzten Kameras fehlerfrei funktionieren.

Bei defekten elektronischen Kameras sind vor allem solche Fehler besonders nachteilig, die nicht sofort erkannt werden. Während ein Totalausfall einer elektronischen Kamera ohne weiteres erkennbar ist und die betreffende Kamera ausgetauscht wird, bleiben Fehler, die nur geringfügige Bildstörungen verursachen und z.B. auf Veränderung der Kennlinien von elektronischen Bauteilen oder erhöhtes Rauschen zurückzuführen sind, möglicherweise zunächst unerkannt.

Dennoch können derartige Bildstörungen bei einer Projektion des Kinofilms auf einer großen Leinwand deutlich sichtbar werden und durch nachträgliche, bei der Postproduktion vorgenommene Bildkorrekturen sogar noch verstärkt werden.

Beim Auftreten von Bildstörungen müssen die betroffenen Bilder aufwendig manuell nachkorrigiert werden. Im schlimmsten Fall muss die Filmaufnahme wiederholt werden, was mit erheblichen Mehrkosten verbunden ist.

Gewöhnlich wird die korrekte Funktion einer elektronischen Kamera verifiziert, indem mit der Kamera definierte Vorlagen abgefilmt werden. Diese enthalten typischerweise verschiedene kalibrierte Farbtafeln, Vorlagen mit hohem Kontrastumfang sowie homogen ausgeleuchtete Flächen. Beispielsweise wird eine Ulbricht-Kugel mit großformatigen Vorlagen verwendet, die in einem abgedunkelten Raum abgefilmt wird.

Eine derartige Ausrüstung ist jedoch häufig zu sperrig, um sie am Drehort zu verwenden. Zudem ist für die Auswertung der aufgenommenen Testdaten insbesondere zur Erkennung von Fehlern in der Signalverarbeitung eine spezielle Analysesoftware nötig, die für ihren Betrieb das Vorhandensein eines Computers und besonderes Fachwissen der Bedienperson erfordert.

Es ist daher die Aufgabe der Erfindung, eine digitale Kamera und ein Verfahren zum Überwachen einer Signalverarbeitungseinrichtung einer digitalen Kamera anzugeben, welche eine Funktionsüberwachung auch während des laufenden Betriebs der Kamera ermöglicht.

Diese Aufgabe wird durch eine digitale Kamera mit den Merkmalen des Anspruchs 1 und insbesondere dadurch gelöst, dass die Kamera zumindest einen ersten Pufferspeicher zur Zwischenspeicherung zumindest eines Teils der digitalen Rohdaten und eine Auswerteeinrichtung aufweist, welche dazu ausgebildet ist, in dem ersten Pufferspeicher gespeicherte Rohdaten mit verarbeiteten Daten der Kamera zu vergleichen.

Hierdurch wird erreicht, dass die digitalen Rohdaten unabhängig von einem regulären Datenfluss der Kamera aufgezeichnet und mittels der Auswerteeinrichtung während des weiteren Betriebs oder zu einem späteren Zeitpunkt mit den verarbeiteten Daten verglichen werden können, ohne dass der laufende Betrieb der Kamera für eine Überprüfung der Signalverarbeitungseinrichtung unterbrochen werden muss. Somit wird ein von dem Hauptdatenpfad unabhängiger Kontrolldatenpfad gebildet, der das Auswerten von Stichproben ermöglicht, nämlich indem Daten aus dem Hauptdatenpfad mit entsprechenden Daten aus dem Kontrolldatenpfad verglichen werden. Sofern signifikante Abweichungen zwischen den Daten festgestellt werden, wird von einem Defekt der Kamera ausgegangen, und es wird ein Fehlersignal erzeugt, beispielsweise um eine optische und/oder akustische Fehlermeldung an den Kameramann auszugeben. Hierbei können Abweichungen innerhalb vorbestimmter Toleranzgrenzen ignoriert werden.

Zur Sicherstellung der korrekten Funktion der Signalverarbeitungseinrichtung des Hauptdatenpfads können die in dem ersten Pufferspeicher vorhandenen Rohdaten also unabhängig von dem Hauptdatenpfad in einem Kontrolldatenpfad zu Daten verarbeitet werden, die den verarbeiteten Ergebnisdaten der Kamera entsprechen (welche am Ausgang der Signalverarbeitungseinrichtung vorliegen und in einem Datenspeicher oder einem zweiten Pufferspeicher aufgezeichnet werden). Dabei ist es zweckmäßig, wenn die zu vergleichenden gespeicherten Rohdaten und verarbeiteten Daten aus denselben Bildsignalen erzeugt sind.

Gemäß einer vorteilhaften Ausführungsform ist der Signalausgang der Signalverarbeitungseinrichtung mit einem Datenspeicher verbunden, wobei der Datenspeicher einen Ausgang aufweist, der mit einem Eingang der Auswerteeinrichtung verbunden ist. Bei dieser Ausgestaltung wird ein zur Aufzeichnung der verarbeiteten Bilddaten ohnehin vorhandener Datenspeicher für das dauerhafte Speichern der verarbeiteten Bilddaten, beispielsweise ein Halbleiterspeicher, ein Magnetband, eine Festplatte oder eine andere optische, magnetische oder magneto-optische Speichereinrichtung, für die Bereitstellung der zu überprüfenden verarbeiteten Daten herangezogen. Bei dem ohnehin vorhandenen Datenspeicher handelt es sich insbesondere um einen lösbar mit der Kamera koppelbaren Wechseldatenspeicher. Dadurch ist es möglich, die Kamera mit nur einem Pufferspeicher auszustatten. Dabei ist es vorteilhaft, wenn der Datenspeicher zur Lieferung der verarbeiteten Daten an die Auswerteeinrichtung über einen Rückkanal oder gesonderten Ausgang verfügt, d.h. der Ausgang für die Verbindung mit der Auswerteeinrichtung ist zusätzlich zu dem regulären Ausgang des Datenspeichers vorgesehen.

Um ein Zuordnen der im Pufferspeicher gespeicherten Rohdaten zu den entsprechenden verarbeiteten Daten zu erleichtern, ist es vorteilhaft, wenn die Schaltungsanordnung derart ausgebildet ist, dass das Speichern der Rohdaten ein zusätzliches Speichern eines die jeweiligen Rohdaten kennzeichnenden Merkmals umfasst. Zusätzlich ist es von Vorteil, auch die verarbeiteten Daten mit einem entsprechenden kennzeichnenden Merkmal zu versehen.

Dieses kennzeichnende Merkmal kann beispielsweise eine eindeutige Nummer und/oder eine Zeitmarke aufweisen.

Gemäß einer weiteren bevorzugten Ausführungsform ist der Signalausgang der Signalverarbeitungseinrichtung mit einem zweiten Pufferspeicher zur Zwischenspeicherung der verarbeiteten Daten verbunden, wobei ein Eingang der Auswerteeinrichtung mit einem Ausgang des zweiten Pufferspeichers verbunden ist. Bei dieser Ausführungsform werden sowohl die digitalen Rohdaten als auch die verarbeiteten Daten in Pufferspeichern gespeichert. Dadurch ist eine vergleichende Auswertung möglich, ohne dass zur Bereitstellung der verarbeiteten Daten auf einen internen oder externen Datenspeicher zugegriffen werden muss.

Die Aufgabe der Erfindung wird ferner durch ein Verfahren mit den Merkmalen des Anspruchs 7 gelöst und insbesondere durch ein Verfahren zum Überwachen einer Signalverarbeitungseinrichtung einer digitalen Kamera, wobei in der Kamera Bildsignale erzeugt werden, die Bildsignale in digitale Rohdaten umgewandelt werden und die digitalen Rohdaten mittels der Signalverarbeitungseinrichtung zu verarbeiteten Daten verarbeitet werden. Das erfindungsgemäße Verfahren ist gekennzeichnet durch ein Speichern zumindest eines Teils der digitalen Rohdaten in einem ersten Pufferspeicher und ein Vergleichen der in dem ersten Pufferspeicher gespeicherten Rohdaten mit den verarbeiteten Daten.

Gemäß einer bevorzugten Ausführungsform des erfindungsgemäßen Verfahrens umfasst das Verarbeiten der Rohdaten wenigstens einen der folgenden Schritte: Durchführen von Korrekturschritten, insbesondere bezüglich eines Dunkelstroms, eines Offsetwerts, der Verstärkung, des oder der Farbwerte, oder des Weißpunkts; Filtern zur Korrektur bezüglich der Aufnahmeapertur, der Kontrastübertragungsfunktion und/oder des Bildrauschens; Ändern der räumlichen Bildauflösung; oder Komprimieren der Rohdaten.

Falls einer der oben genannten Schritte auf die Rohdaten angewandt wurde, ist es meist nicht mehr möglich, Bildstörungen, die durch eine fehlerhafte Verarbeitung verursacht wurden, nachträglich zu korrigieren. Daher ist es vorteilhaft, das erfindungsgemäße Verfahren während des laufenden Betriebs, beispielsweise zu Beginn einer neuen Aufnahmesequenz oder stichprobenweise in bestimmten Zeitintervallen durchzuführen, damit vermieden wird, dass eine defekte Kamera über einen längeren Zeitraum unbemerkt weiter betrieben wird.

Gemäß einer weiteren vorteilhaften Ausführungsform umfasst das Speichern der Rohdaten und das Vergleichen der gespeicherten Rohdaten mit den verarbeiteten Daten die folgenden Schritte: Festlegen der Größe und Position eines Bildausschnitts, nachfolgendes Speichern der zu diesem Bildausschnitt gehörenden Rohdaten in dem ersten Pufferspeicher, und Vergleichen der zu diesem Bildausschnitt gehörenden Rohdaten mit den verarbeiteten Daten für diesen Bildausschnitt, wobei vor einem erneuten Speichern von Rohdaten in dem ersten Pufferspeicher die Position und/oder die Größe des Bildausschnitts geändert werden. Durch das nur ausschnittsweise Speichern der Rohdaten können zur Kostensenkung auch Pufferspeicher eingesetzt werden, deren Speicherplatz für die Speicherung eines vollständigen Bildes nicht ausreicht.

Um dennoch im Laufe der Zeit eine vollständige Überprüfung der Signalverarbeitungseinrichtung zu erhalten, wird bei einer vorteilhaften Ausgestaltung der Erfindung das Speichern der Rohdaten und das Vergleichen der gespeicherten Rohdaten mit den verarbeiteten Daten in mehreren Prüfvorgängen für eine Anzahl von Bildausschnitten durchgeführt, wobei die Anzahl der Bildausschnitte die Fläche eines zur Erzeugung der Bildsignale vorgesehenen Bildsensors vollständig abdeckt. Somit ist gewährleistet, dass nach Ablauf der Prüfvorgänge eine Aussage über die Funktionsfähigkeit der Signalverarbeitung für alle Pixel möglich ist. Weitere vorteilhafte Ausgestaltungen der Erfindung sind in den Unteransprüchen, der Beschreibung und der Zeichnung angegeben.

Die Erfindung wird nachfolgend anhand von Ausführungsbeispielen mit Bezug auf die Zeichnung beschrieben.

Es zeigen, jeweils in schematischer Darstellung
- Fig. 1: eine erste Ausführungsform einer erfindungsgemäßen digita- len Kamera, und
- Fig. 2: eine zweite Ausführungsform einer erfindungsgemäßen digita- len Kamera.

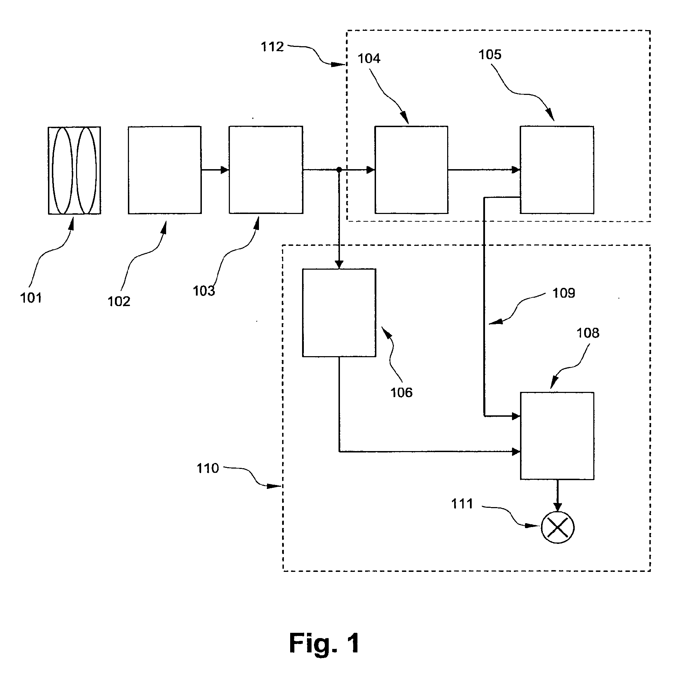

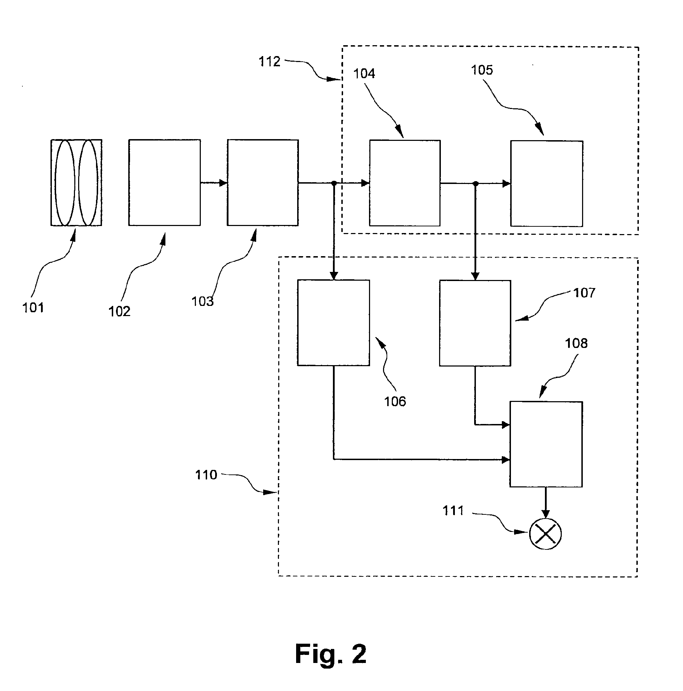

Die in Fig. 1 und 2 dargestellte Kamera weist ein Objektiv 101 auf, welches ein Bild auf einem Bildsensor 102 erzeugt, der eine Vielzahl von in Zeilen und Spalten angeordneten lichtempfindlichen Elementen bzw. Pixel umfasst, welche durch das Objektiv fallendes Licht in elektrische Signale umwandelt. Als Bildsensor 102 kann beispielsweise ein CCD-Sensor oder ein CMOS-Sensor vorgesehen werden.

Zum Auslesen eines Bildes wird jedes der Pixel adressiert, und ein Signal, das zu einer durch eine Belichtung gesammelten Ladung des Pixels proportional ist, wird zu einem Ausgang des Bildsensors geleitet, der mit einem oder mehreren Analog-Digital-Wandlern 103 verbunden ist. Aus Gründen der Übersichtlichkeit ist in den Figuren nur ein Analog-Digital-Wandler 103 dargestellt, in dem eine Umwandlung der Bildsignale in digitale Rohdaten erfolgt.

Der Analog-Digital-Wandler 103 weist einen Ausgang auf, der mit einer Signalverarbeitungseinrichtung 104 verbunden ist. In der Signalverarbeitungseinrichtung 104 werden die Rohdaten einem oder mehreren Verarbeitungsschritten unterzogen, welche beispielsweise ein Durchführen von Korrekturschritten, insbesondere einer Offset-, Dunkelstrom-, Gain-, Farbwert-, oder Weißpunktkorrektur umfassen. Ferner können die digitalen Rohdaten mittels einer Filterung bezüglich der Aufnahmeapertur, der Kontrastübertragungsfunktion (MTF) und/oder des Bildrauschens korrigiert werden. Schließlich kann auch eine Änderung der Bildauflösung oder eine Datenkompression zur Verringerung des Speicherbedarfs durchgeführt werden. Beispielhaft kann die Signalverarbeitungseinrichtung 104 durch ein sogennanntes FPGA (field programmable gate array) realisiert sein.

Ein Ausgang der Signalverarbeitungseinrichtung 104 ist mit einem Eingang eines Datenspeichers 105 verbunden. Bei dem Datenspeicher 105 kann es sich z.B. um optische, magnetische oder magneto-optische Aufzeichnungsmedien oder auch Halbleiterspeicher handeln. Die von der Signalverarbeitungseinrichtung 104 an ihrem Ausgang bereitgestellten verarbeiteten Daten werden in dem Datenspeicher 105 bzw. auf einem entsprechenden Medium des Datenspeichers 105 gespeichert (so genannter Hauptdatenpfad 112).

Zur Bildung eines so genannten Kontrolldatenpfads 110 ist der Ausgang des Analog-Digital-Wandlers 103 zusätzlich mit dem Eingang eines ersten Pufferspeichers 106 verbunden, welcher zur Speicherung der digitalen Rohdaten vorgesehen ist. Die Rohdaten, aber auch die verarbeiteten Daten können für die Speicherung im ersten Pufferspeicher 106 bzw. im Datenspeicher 105 mit einem kennzeichnenden Merkmal versehen werden, das z.B. eine fortlaufende Nummerierung oder eine Zeitmarke enthalten kann. Der Ausgang des ersten Pufferspeichers 106 ist mit einem ersten Eingang einer Auswerteeinrichtung 108 verbunden.

Bei der digitalen Kamera gemäß der ersten Ausführungsform (Fig. 1) weist der Datenspeicher 105 einen Rückkanal 109 auf, d.h. ein Ausgang des Datenspeichers 105 ist mit einem zweiten Eingang der Auswerteeinrichtung 108 verbunden, um verarbeitete Daten an die Auswerteeinrichtung 108 zu übermitteln.

Soll nun eine Funktionsüberprüfung der Signalverarbeitungseinrichtung 104 bei der digitalen Kamera gemäß der ersten Ausführungsform (Fig. 1) durchgeführt werden, werden zunächst vom Analog-Digital-Wandler 103 erzeugte Rohdaten in dem Pufferspeicher 106 gespeichert. Die gespeicherten Rohdaten können der gesamten Bildfläche des Bildsensors 102 oder auch nur einem Bildausschnitt, d.h. einem Teilbereich des Bildsensors 102, entsprechen. Es können aber auch mehrere, nacheinander oder nach Ablauf bestimmter Zeitintervalle aufgenommene Bilder abgespeichert werden.

Die im Pufferspeicher 106 zu speichernden Rohdaten werden aus dem regulären Datenfluss, welcher nach der Verarbeitung in der Signalverarbeitungseinrichtung 104 in dem Datenspeicher 105 gespeichert wird, abgezweigt. Somit stehen im Datenspeicher 105 verarbeitete Daten zur Verfügung, die aus denselben Bildsignalen wie die im Pufferspeicher 106 gespeicherten Rohdaten erzeugt wurden.

Zur Auswertung werden sowohl die im ersten Pufferspeicher 106 gespeicherten Rohdaten als auch die im Datenspeicher 105 gespeicherten verarbeiteten Daten an die Eingänge der Auswerteeinrichtung 108 übermittelt, die die im ersten Pufferspeicher 106 gespeicherten Rohdaten verarbeitet und beide Daten nachfolgend miteinander vergleicht, um etwaige Fehlfunktionen der Signalverarbeitungseinrichtung 104 erkennen zu können. Das mit den Daten abgespeicherte kennzeichnende Merkmal erlaubt die jeweilige Zuordnung der Daten. Die Auswerteeinrichtung 108 kann beispielsweise einen softwaregesteuerten Prozessor aufweisen, dessen Steuerprogramm die von der Signalverarbeitungseinrichtung 104 im Hauptdatenpfad 112 durchgeführten Verarbeitungsschritte nachbildet und diese auf die im Pufferspeicher 106 vorhandenen Rohdaten anwendet.

Die auf diese Weise in der Auswerteeinrichtung 108 verarbeiteten Rohdaten werden in einer in der Auswerteeinrichtung 108 vorgesehenen Vergleichseinheit mit den aus dem Datenspeicher 105 abgerufenen verarbeiteten Daten verglichen, wobei die Vergleichseinheit ebenfalls einen softwaregesteuerten Prozessor, insbesondere den zugleich für die Verarbeitung der im Pufferspeicher 106 gespeicherten Rohdaten zuständigen Prozessor, umfassen kann.

Eine derartige softwaremäßige Nachbildung der Verarbeitungsschritte in der Auswerteeinrichtung 108 ist mit einem hohen Rechenaufwand verbunden, wobei gewisse Fehler, insbesondere Rundungsfehler, auftreten können, welche auch bei einwandfreier Funktion der Signalverarbeitungseinrichtung 104 zu gewissen Abweichungen der dem Vergleich zugrunde legenden Daten führen können.

Diese geringfügigen Abweichungen sind jedoch nicht notwendigerweise kritisch und können beim Vergleich ignoriert werden, indem zum Beispiel pixelweise ein Differenzwert zwischen den zu vergleichenden Daten gebildet wird und die Häufigkeit bestimmter Differenzwerte ermittelt wird. Zusätzlich kann der mittlere Differenzwert der zu vergleichenden Daten ermittelt werden. Für die anteilige Häufigkeit bestimmter Differenzwerte können dann Grenzwerte vorgegeben werden. Beispielsweise darf die Differenz für höchstens 10% aller Pixel lediglich einen vorbestimmten Zahlenwert, für höchstens 1% aller Pixel lediglich einen vorbestimmten, etwas höheren Zahlenwert, für höchstens 0,1% aller Pixel lediglich einen vorbestimmten, noch höheren Zahlenwert und für kein Pixel mehr als einen vorbestimmten, nochmals höheren Zahlenwert betragen. Zudem darf der mittlere Differenzwert nicht größer sein als ein anderer vorbestimmter Zahlenwert.

Grundsätzlich sind jedoch auch andere Vergleichsmethoden möglich. So kann pixelweise ein Quotient berechnet werden oder eine gewichtete Differenz mittels Look-Up-Tabellen ermittelt werden.

Sinnvollerweise werden die Vergleichsmethoden und die zugrunde liegenden Grenzwerte so ausgewählt, dass bei ordnungsgemäßer Funktion der Kamera gerade keine Überschreitung von Grenzwerten festgestellt wird. Somit gelten bei Einhaltung der Grenzwerte die zu vergleichenden Daten als im wesentlichen gleich und die Kamera als funktionsfähig.

Eine Überschreitung von Grenzwerten und damit eine Fehlfunktion der Kamera wird der Bedienperson mittels einer Signalanzeige 111 mitgeteilt. Diese Signalanzeige 111 kann beispielsweise ein optisches und/oder akustisches Signal und/oder eine Text- oder Symbolanzeige auf einem Display ausgeben. Insbesondere kann die Signalanzeige 111 eine mehrfarbige Kontrollleuchte umfassen, welche die ordnungsgemäße Funktion der Kamera mit grünem Licht und eine aufgrund einer Grenzwertüberschreitung detektierte Fehlfunktion mit gelbem oder rotem Licht signalisiert.

Die Kamera weist somit zwei unabhängige Datenpfade für die vom Analog-Digital-Wandler 103 erzeugten Daten auf, nämlich einen über die Signalverarbeitungseinrichtung 104 und den Datenspeicher 105 führenden Hauptdatenpfad 112 und einen Kontrolldatenpfad 110, welcher über den Pufferspeicher 106 und den in der Auswerteeinrichtung 108 vorgesehenen Prozessor führt, der die im Pufferspeicher gespeicherten Rohdaten auf ähnliche Weise verarbeitet wie die Signalverarbeitungseinrichtung 104. Die über diese Datenpfade 110, 112 angelieferten Daten werden in der Auswerteeinrichtung 108 bevorzugt stichprobenhaft verglichen.

Die digitale Kamera gemäß der zweiten Ausführungsform (Fig. 2) unterscheidet sich von der ersten Ausführungsform darin, dass zusätzlich ein zweiter Pufferspeicher 107 vorgesehen ist, dessen Eingang ebenso wie der Eingang des Datenspeichers 105 mit dem Ausgang der Signalverarbeitungseinrichtung 104 verbunden ist. Ein Ausgang des zweiten Pufferspeichers 107 ist mit dem zweiten Eingang der Auswerteeinrichtung 108 verbunden. Ein Rückkanal 109 gemäß der ersten Ausführungsform braucht nicht vorgesehen werden.

Bei einer Funktionsüberprüfung der Signalverarbeitungseinrichtung 104 bei der digitalen Kamera gemäß der zweiten Ausführungsform (Fig. 2) werden die verarbeiteten Daten nicht aus dem Datenspeicher 105, sondern aus dem zweiten Pufferspeicher 107 in die Auswerteeinrichtung 108 eingelesen.

Die Speicherung von Daten in den Pufferspeichern 106, 107 erfolgt derart, dass die von dem Analog-Digital-Wandler 103 erzeugten Rohdaten sowohl dem ersten Pufferspeicher 106 zur Speicherung als auch der Signalverarbeitungseinrichtung 104 zur Verfügung gestellt werden. Die auf diese Rohdaten zurückgehenden, von der Signalverarbeitungseinrichtung 104 ausgegebenen verarbeiteten Daten werden nach erfolgter Signalverarbeitung sowohl dem Datenspeicher 105 als auch dem zweiten Pufferspeicher 107 zur Speicherung zugeführt, wobei die im zweiten Pufferspeicher 107 gespeicherten Daten ebenfalls mit einem kennzeichnenden Merkmal zur eindeutigen Identifizierung versehen werden können. Bei entsprechender Synchronisation der Speichervorgänge könnte alternativ auf eine Kennzeichnung der Rohdaten bzw. verarbeiteten Daten verzichtet werden.

Wie beim ersten Pufferspeicher 106 können auch im zweiten Pufferspeicher 107 ein oder mehrere Bilder oder Bildausschnitte gespeichert werden.

Der Vergleich der Rohdaten mit den verarbeiteten Daten erfolgt in der Auswerteeinrichtung 108 in gleicher Weise wie bei der ersten Ausführungsform. Insbesondere ist die Auswerteeinrichtung 108 dazu ausgebildet, die in der Signalverarbeitungseinrichtung 104 für die digitalen Rohdaten vorgesehenen Verarbeitungsschritte nachzubilden und die nachgebildeten Verarbeitungsschritte auf die in dem ersten Pufferspeicher 106 gespeicherten Rohdaten anzuwenden, bevor diese mit den im zweiten Pufferspeicher 107 gespeicherten Daten verglichen werden. Der Hauptdatenpfad 112 umfasst bei dieser Ausführungsform wiederum die Signalverarbeitungseinrichtung 104 und den Datenspeicher 105, während der über den ersten Pufferspeicher 106 und der über den zweiten Pufferspeicher 107 zur Auswerteeinrichtung 108 führende Datenpfad bei der zweiten Ausführungsform gemäß Fig. 2 gemeinsam den Kontrolldatenpfad 110 bilden.

### Bezugszeichenliste

- 101: Objektiv
- 102: Bildsensor
- 103: Analog-Digital-Wandler
- 104: Signalverarbeitungseinrichtung
- 105: Datenspeicher
- 106: erster Pufferspeicher
- 107: zweiter Pufferspeicher
- 108: Auswerteeinrichtung
- 109: Rückkanal
- 110: Kontrolldatenpfad
- 111: Signalanzeige
- 112: Hauptdatenpfad

## Patentansprüche

1. Digitale Kamera mit einem Bildsensor (102) zur Erzeugung von analogen Bildsignalen, einem Analog/ Digital-Wandler (103) zur Umwandlung der Bildsignale in digitale Rohdaten, und einer Signalverarbeitungseinrichtung (104) zur Erzeugung verarbeiteter Daten aus den Rohdaten, wobei die Signalverarbeitungseinrichtung (104) einen Signalausgang aufweist,
**dadurch gekennzeichnet,**
**dass** die Kamera zumindest einen ersten Pufferspeicher (106) zur Zwischenspeicherung zumindest eines Teils der digitalen Rohdaten und eine Auswerteeinrichtung (108) aufweist, welche dazu ausgebildet ist, in dem ersten Pufferspeicher (106) gespeicherte Rohdaten mit den verarbeiteten Daten zu vergleichen.

2. Digitale Kamera nach Anspruch 1,
**dadurch gekennzeichnet,**
**dass** ein Eingang des ersten Pufferspeichers (106) mit einem Ausgang des Analog-Digital-Wandlers (103) verbunden ist.

3. Digitale Kamera nach Anspruch 1 oder 2,
**dadurch gekennzeichnet,**
**dass** der Signalausgang der Signalverarbeitungseinrichtung (104) mit einem Datenspeicher (105) verbunden ist, wobei der Datenspeicher (105) einen Ausgang aufweist, der mit einem Eingang der Auswerteeinrichtung (108) verbunden ist,
oder
**dass** der Signalausgang der Signalverarbeitungseinrichtung (104) mit einem zweiten Pufferspeicher (107) zur Zwischenspeicherung der verarbeiteten Daten verbunden ist, wobei ein Eingang der Auswerteeinrichtung (108) mit einem Ausgang des zweiten Pufferspeichers (107) verbunden ist.

4. Digitale Kamera nach einem der vorhergehenden Ansprüche,
**dadurch gekennzeichnet,**
**dass** die digitale Kamera ferner derart ausgebildet ist, dass das Speichern der Rohdaten ein zusätzliches Speichern eines die jeweiligen Rohdaten kennzeichnenden Merkmals umfasst,
wobei das Merkmal vorzugsweise eine eindeutige Nummer und/oder eine Zeitmarke aufweist.

5. Digitale Kamera nach einem der vorhergehenden Ansprüche,
**dadurch gekennzeichnet,**
**dass** die Auswerteeinrichtung (108) dazu ausgebildet ist, die in der Signalverarbeitungseinrichtung (104) für die digitalen Rohdaten vorgesehenen Verarbeitungsschritte nachzubilden und die nachgebildeten Verarbeitungsschritte auf die in dem ersten Pufferspeicher (106) gespeicherten Rohdaten anzuwenden, bevor die in dem ersten Pufferspeicher (106) gespeicherten Rohdaten mit den verarbeiteten Daten verglichen werden.

6. Digitale Kamera nach einem der vorhergehenden Ansprüche,
**dadurch gekennzeichnet,**
**dass** die Auswerteeinrichtung (108) dazu ausgebildet ist, ein Fehlersignal zu erzeugen, falls eine Abweichung zwischen den in dem ersten Pufferspeicher (106) gespeicherten Rohdaten und den verarbeiteten Daten wenigstens einen vorbestimmten Grenzwert erreicht oder überschreitet.

7. Verfahren zum Überwachen einer Signalverarbeitungseinrichtung (104) einer digitalen Kamera, wobei in der Kamera Bildsignale erzeugt werden, die Bildsignale in digitale Rohdaten umgewandelt werden und die digitalen Rohdaten mittels der Signalverarbeitungseinrichtung (104) zu verarbeiteten Daten verarbeitet werden, **gekennzeichnet durch**:
Speichern zumindest eines Teils der digitalen Rohdaten in einem ersten Pufferspeicher (106), und
Vergleichen der in dem ersten Pufferspeicher (106) gespeicherten Rohdaten mit den verarbeiteten Daten.

8. Verfahren nach Anspruch 7,
**dadurch gekennzeichnet,**
**dass** die zu vergleichenden gespeicherten Rohdaten und verarbeiteten Daten aus denselben Bildsignalen erzeugt werden, und/oder
**dass** die in dem ersten Pufferspeicher (106) gespeicherten Rohdaten vor dem Vergleichen mit den verarbeiteten Daten an das Format der verarbeiteten Daten angepasst werden.

9. Verfahren nach Anspruch 7 oder 8,
**dadurch gekennzeichnet,**
**dass** das Vergleichen der in dem ersten Pufferspeicher (106) gespeicherten Rohdaten mit den verarbeiteten Daten in einem Kontrolldatenpfad (110) erfolgt, der unabhängig von einem Hauptdatenpfad (112) der Kamera ist, wobei der Kontrolldatenpfad (110) zumindest den ersten Pufferspeicher (106) und eine Auswerteeinrichtung (108) umfasst und wobei der Hauptdatenpfad (112) zumindest die Signalverarbeitungseinrichtung (104) umfasst.

10. Verfahren nach einem der Ansprüche 7 bis 9,
ferner mit den Schritten:
Speichern der verarbeiteten Daten in einem Datenspeicher (105), und
Auslesen zumindest eines Teils der verarbeiteten Daten aus dem Datenspeicher und Bereitstellen dieser Daten für das Vergleichen.

11. Verfahren nach einem der Ansprüche 7 bis 9,
ferner mit dem Schritt:
Speichern der verarbeiteten Daten in einem zweiten Pufferspeicher (107); und
vorzugsweise ferner mit dem Schritt:
Auslesen zumindest eines Teils der verarbeiteten Daten aus dem zweiten Pufferspeicher (107) und Bereitstellen dieser Daten für das Vergleichen.

12. Verfahren nach einem der Ansprüche 7 bis 11,
**dadurch gekennzeichnet,**
**dass** das Speichern der Rohdaten ein zusätzliches Speichern eines die jeweiligen Rohdaten kennzeichnenden Merkmals umfasst, wobei das Merkmal vorzugsweise eine eindeutige Nummer und/oder eine Zeitmarke umfasst.

13. Verfahren nach einem der Ansprüche 7 bis 12,
**dadurch gekennzeichnet,**
**dass** das Verarbeiten der Rohdaten wenigstens einen der folgenden Schritte umfasst:
Durchführen von Korrekturschritten, insbesondere bezüglich eines Dunkelstroms, eines Offsetwertes, der Verstärkung, des oder der Farbwerte, oder des Weißpunkts;
Filtern zur Korrektur bezüglich der Aufnahmeapertur, der Kontrastübertragungsfunktion und/oder des Bildrauschens;
Ändern der räumlichen Bildauflösung; oder
Komprimieren der Rohdaten.

14. Verfahren nach einem der Ansprüche 7 bis 13,
**dadurch gekennzeichnet,**
**dass** das Speichern der Rohdaten und das Vergleichen der gespeicherten Rohdaten mit den verarbeiteten Daten die folgenden Schritte umfasst:
Festlegen der Größe und Position eines Bildausschnitts,
nachfolgendes Speichern der zu diesem Bildausschnitt gehörenden Rohdaten in dem ersten Pufferspeicher (106), und
Vergleichen der zu diesem Bildausschnitt gehörenden Rohdaten mit den verarbeiteten Daten für diesen Bildausschnitt,
wobei vor einem erneuten Speichern von Rohdaten in dem ersten Pufferspeicher (106) die Position und/oder die Größe des Bildausschnitts geändert werden.

15. Verfahren nach Anspruch 14,
**dadurch gekennzeichnet,**
**dass** das Speichern der Rohdaten und das Vergleichen der gespeicherten Rohdaten mit den verarbeiteten Daten in mehreren Prüfvorgängen für eine Anzahl von Bildausschnitten durchgeführt wird, wobei die Anzahl der Bildausschnitte die Fläche eines zur Erzeugung der Bildsignale vorgesehenen Bildsensors vollständig abdeckt.
